# EUROPÄISCHE PATENTSCHRIFT

(11) **EP 3 275 630 B1**
(45) Veröffentlichungstag und Bekanntmachung des Hinweises auf die Patenterteilung: **17.07.2019**
(21) Anmeldenummer: 17172785.2
(22) Anmeldetag: 24.05.2017
(51) Int. Cl.: B29C 64/245, B29C 64/25, B33Y 30/00, B22F 3/105

(54) **BAUKAMMER FÜR EINE VORRICHTUNG ZUR ADDITIVEN HERSTELLUNG DREIDIMENSIONALER OBJEKTE**
CONSTRUCTION CHAMBER FOR A DEVICE FOR ADDITIVE MANUFACTURING OF THREE-DIMENSIONAL OBJECTS
CHAMBRE DE CONSTRUCTION POUR UN DISPOSITIF DE FABRICATION ADDITIVE D'OBJETS TRIDIMENSIONNELS

(30) Priorität: 29.07.2016 DE 102016114057
(43) Veröffentlichungstag der Anmeldung: 31.01.2018
(60) Teilanmeldung: 19174599.1
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); SCHÖDEL, Frank, 96317 Kronach (DE)
(74) Vertreter: Hafner & Kohl

(56) Entgegenhaltungen:
- WO-A2-2014/020085
- DE-A1-102009 020 987
- DE-A1-102015 000 003

## Beschreibung

Die Erfindung betrifft eine Baukammer für eine Vorrichtung zur additiven Herstellung dreidimensionaler Objekte gemäss Anspruch 1, umfassend einen Baukammergrundkörper, welcher ein einen Bauraum bildendes Bauvolumen begrenzt.

Derartige Baukammern sind im Zusammenhang mit der additiven Herstellung dreidimensionaler Objekte, d. h. insbesondere technischer Bauteile bzw. Bauteilgruppen, an und für sich bekannt. Entsprechende Baukammern umfassen einen Baukammergrundkörper, welcher ein einen Bauraum bildendes Bauvolumen begrenzt.

WO2014020085, DE102015000003 und DE102009020987 offenbaren Vorrichtungen zur additiven Herstellung dreidimensionaler Objekte, die eine einen Bauraum definierende Baukammer umfassen.

Die Fertigung entsprechender Baukammern erfolgt typischerweise durch spanende Bearbeitung. Hierbei wird der Baukammergrundkörper durch einen spanenden Bearbeitungsprozess, d. h. insbesondere einen Fräsprozess, aus einem blockartigen massiven Werkstück gefertigt.

Die Fertigung vergleichsweise hoher Baukammern, d. h. insbesondere Baukammern, deren Bauraum bzw. Bauvolumen eine maximale Höhe von wenigstens 50 cm überschreitet, kann im Hinblick auf die geforderten engen Toleranzen mit den bekannten Fertigungsverfahren problematisch sein. Dies begründet sich dadurch, dass entsprechend hohe Baukammern nicht mehr in einem Arbeitsgang gefertigt werden können.

Der Erfindung liegt damit die Aufgabe zugrunde, eine demgegenüber, insbesondere im Hinblick auf eine einfache Fertigungsmöglichkeit unter Beachtung gegebener Toleranzerfordernisse, verbesserte Baukammer anzugeben.

Die Aufgabe wird durch eine Baukammer gemäß Anspruch 1 gelöst. Die hierzu abhängigen Ansprüche betreffen vorteilhafte Ausführungsformen der Baukammer.

Die hierin beschriebene Baukammer stellt eine Funktionskomponente einer Vorrichtung zur additiven Herstellung dreidimensionaler Objekte dar. Eine entsprechende Vorrichtung ist zur additiven Herstellung wenigstens eines dreidimensionalen Objekts (im Weiteren abgekürzt als "Objekt" bezeichnet), d. h. insbesondere technischer Bauteile bzw. technischer Bauteilgruppen, durch sukzessive schichtweise selektive Belichtung und damit einhergehende Verfestigung einzelner Baumaterialschichten aus einem verfestigbaren Baumaterial vermittels wenigstens eines Energiestrahls eingerichtet. Bei dem verfestigbaren Baumaterial kann es sich um ein Metall-, Kunststoff- und/oder Keramikpulver handeln. Unter einem Metall-, Kunststoff- oder Keramikpulver kann auch ein Pulvergemisch unterschiedlicher Metalle, Kunststoffe oder Keramiken verstanden werden. Bei dem Energiestrahl kann es sich um einen Laserstrahl handeln. Bei der Vorrichtung kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Die Baukammer wird im Rahmen der Durchführung additiver Herstellungsprozesse schichtweise mit selektiv zu verfestigendem Baumaterial befüllt. Der additive Aufbau des oder der jeweils additiv herzustellenden Objekte erfolgt in der Baukammer. Hierfür umfasst die Baukammer einen Baukammergrundkörper, welcher einen Bauraum begrenzt. Der Bauraum bildet bzw. beinhaltet ein Bauvolumen. Der Bauraum ist im Bereich seines Bodens von einer in dem Bauraum angeordneten Bauplatte bzw. deren (bei nicht mit Baumaterial befülltem Bauraum freiliegenden) Oberseite abschließbar bzw. abgeschlossen. Die Bauplatte ist typischerweise mit einer Trageinrichtung gekoppelt, über welche die Bauplatte, insbesondere in einer vertikalen Bewegungsrichtung, relativ zu dem Baukammergrundkörper bewegbar gelagert ist. Die Baukammer, die Bauplatte und die Trageinrichtung können ein Baumodul bilden und entsprechend als solches bezeichnet bzw. erachtet werden.

Wesentlich an der hierin beschriebenen Baukammer ist, dass der Baukammergrundkörper segmentiert ausgebildet ist. Der Baukammergrundkörper umfasst sonach mehrere unter Ausbildung des Baukammergrundkörpers aneinander befestigbare bzw. im Montagezustand der Baukammer aneinander befestigte Baukammergrundkörpersegmente. Die Segmentierung des Baukammergrundkörpers in die Baukammergrundkörpersegmente erfolgt je nach Anzahl der Baukammergrundkörpersegmente in wenigstens einer, gegebenenfalls mehreren, Segmentierungsebenen. Eine jeweilige Segmentierungsebene kann grundsätzlich beliebig im Raum stehen; entsprechende Baukammergrundkörpersegmente können prinzipiell in horizontaler und/oder vertikaler Ausrichtung angeordnet sein. Auch bezüglich einer horizontalen oder vertikalen Referenzebene geneigte Segmentierungsebenen sind prinzipiell denkbar.

Die jeweiligen Baukammergrundkörpersegmente sind in ihren geometrisch-konstruktiven Abmessungen so gewählt, dass diese jeweils in einem Arbeitsgang gefertigt werden können. Der bis dato problematischen Fertigung vergleichsweise hoher Baukammern, d. h. insbesondere Baukammern, deren Bauraum bzw. Bauvolumen eine maximale Höhe von wenigstens 50 cm überschreitet, d. h. gegebenenfalls 100 cm oder mehr beträgt, mit den geforderten engen Toleranzen wird sonach durch eine Segmentierung der Baukammer in mehrere, unter Ausbildung des Baukammergrundkörpers aneinander befestigbare bzw. im Montagezustand der Baukammer aneinander befestigte Baukammergrundkörpersegmente begegnet.

Durch die Möglichkeit der Befestigung jeweiliger Baukammergrundkörpersegmente aneinander lassen sich grundsätzlich beliebig hohe Baukammern ausbilden. Dies gilt selbstverständlich insbesondere für den Fall der stapelartigen vertikalen Anordnung bzw. Befestigung jeweiliger Baukammergrundkörpersegmente übereinander. Hieraus ergibt sich, dass der Baukammergrundkörper vorzugsweise in wenigstens einer horizontalen Segmentierungsebene segmentiert ausgebildet ist, wobei die jeweiligen Baukammergrundkörpersegmente bei Segmentierung in der horizontalen Segmentierungsebene in vertikaler bzw. vertikal benachbarter Anordnung übereinander aneinander befestigbar oder befestigt sind.

Die jeweiligen Baukammergrundkörpersegmente können eine (hohl)quaderartige bzw. -förmige, hohlzylinderartige bzw. -förmige oder ringscheibenartige bzw. - förmige Grundform aufweisen. Die Baukammergrundkörpersegmente umfassen sonach jeweils einen deren jeweilige Grundform (mit)definierenden, durch jeweilige baukammergrundkörpersegmentseitige Wandungen begrenzten Innenraum. Der jeweilige baukammergrundkörpersegmentseitige Innenraum bildet (im Montagezustand der Baukammer) einen Teil des Bauraums bzw. Bauvolumens. Jedes Baukammergrundkörpersegment begrenzt sonach einen einen vollen Innenumfang des Bauraums beschreibenden Bauraumabschnitt.

Grundsätzlich können die Baukammergrundkörpersegmente in geometrisch-konstruktiver identisch ausgebildet sein oder sich in wenigstens einem geometrisch-konstruktiven Parameter, insbesondere deren jeweiliger Höhe, unterscheidend ausgebildet sein. In geometrisch-konstruktiver Hinsicht kann die Baukammer sonach (mehrere) identische Baukammergrundkörpersegmenten oder (mehrere) unterschiedliche Baukammergrundkörpersegmenten umfassen. Die geometrisch-konstruktiven Abmessungen der jeweiligen Baukammergrundkörpersegmente können insbesondere im Hinblick auf die Realisierung einer bestimmten Sollhöhe der Baukammer bzw. des Bauraums gewählt werden.

Zur Befestigung - die Befestigung ist typischerweise (beschädigungs- bzw. zerstörungsfrei) lösbar - jeweils zur Ausbildung des Baukammergrundkörpers aneinander zu befestigender bzw. befestigter Baukammergrundkörpersegmente kann an jedem Baukammergrundkörpersegment wenigstens ein Befestigungselement angeordnet oder ausgebildet sein. Die jeweiligen Befestigungselemente sind eingerichtet, unter Ausbildung einer (lösbaren) Befestigung wenigstens zweier miteinander zur Ausbildung des Grundkörpers zu verbindender oder verbundener Baukammergrundkörpersegmente zusammenzuwirken. Dabei können die jeweiligen Befestigungselemente insbesondere eingerichtet sein, unter Ausbildung einer Befestigung wenigstens zweier miteinander zur Ausbildung des Grundkörpers zu verbindender oder verbundener Baukammergrundkörpersegmente form- und/oder kraftschlüssig zusammenzuwirken. Hierunter ist insbesondere zu verstehen, dass die jeweiligen Befestigungselemente eingerichtet sind, miteinander unter Ausbildung einer form- und/oder kraftschlüssigen Verbindung zusammenzuwirken bzw. eingerichtet sind, eine solche auszubilden.

Bei entsprechenden Befestigungselementen kann es sich sonach um, gegebenenfalls korrespondierende, Formschlusselemente, welche eingerichtet sind, unter Ausbildung einer formschlüssigen Verbindung zusammenzuwirken bzw. eingerichtet sind, eine solche herzustellen, oder um, gegebenenfalls korrespondierende, Kraftschlusselemente, welche eingerichtet sind, unter Ausbildung einer kraftschlüssigen Verbindung zusammenzuwirken bzw. eingerichtet sind, eine solche herzustellen, handeln. Entsprechende Formschlusselemente können konkret z. B. als Vorsprung und hierzu (korrespondierende) Aufnahme bzw. Ausnehmung ausgebildet sein. Mithin kann sich durch das Zusammenwirken entsprechender Formschlusselemente z. B. eine Nut-Feder-Verbindung bzw. einer Verbindung nach Art einer solchen ausbilden lassen. Entsprechende Kraftschlusselemente können konkret z. B. als Bolzen bzw. Passstifte und hierzu (korrespondierende), gegebenenfalls mit einem Gegengewinde versehene, Aufnahmen bzw. Ausnehmungen ausgebildet sein. Mithin kann sich durch das Zusammenwirken entsprechender Kraftschlusselemente z. B. eine Bolzen- bzw. Passstift-Verbindung bzw. eine Verbindung nach Art einer solchen ausbilden lassen.

Für die Variante, gemäß welcher die jeweiligen Befestigungselemente eingerichtet sind, unter Ausbildung einer Befestigung wenigstens zweier miteinander zur Ausbildung des Grundkörpers zu verbindender oder verbundener Baukammergrundkörpersegmente kraftschlüssig zusammenzuwirken, ist es denkbar, dass die jeweiligen Befestigungselemente als zumindest abschnittsweise von einem Befestigungsbolzen durchsetzbare, insbesondere bohrungsartige, Befestigungsaufnahmen bzw. -ausnehmungen ausgebildet sind und im aneinander befestigten Zustand zumindest abschnittsweise von einem entsprechenden Befestigungsbolzen durchsetzt sind. Bei einem Befestigungsbolzen kann es sich um einen Gewinde- bzw. Schraubbolzen handeln. Eine Befestigungsaufnahme bzw. -ausnehmung eines ersten Baukammergrundkörpersegments ist dabei als Durchgangsbohrung ausgebildet, eine Befestigungsaufnahme bzw. -ausnehmung eines mit dem ersten Baukammergrundkörpersegment zu verbindenden zweiten Baukammergrundkörpersegments kann als Sackbohrung ausgebildet sein. Um jeweilige Baukammergrundkörpersegmente beliebig handzuhaben, kann jedes Baukammergrundkörpersegment im Bereich eines (oberen) ersten Randbereichs mit einer Durchgangsbohrung und im Bereich eines dieser gegenüber liegend angeordneten oder ausgebildeten (unteren) ersten Randbereichs mit einer Sackbohrung versehen sein.

Jeweilige Befestigungsaufnahmen bzw. -ausnehmungen können dabei in einem (querschnittlich betrachtet) verjüngten Aussparungsbereich des jeweiligen Baukammergrundkörpersegments angeordnet oder ausgebildet sein, sodass diese die Außenabmessungen des jeweiligen Baukammergrundkörpersegments bzw. der gesamten Baukammer nicht erweitern.

Bei den Baukammergrundkörpersegmenten handelt es sich typischerweise um spanend, d. h. insbesondere gefräst, gefertigte metallische Bauteile. Denkbar ist gleichwohl auch eine Fertigung der Baukammergrundkörpersegmente mittels Drahterodierens bzw. Drahtschneidens.

Bei dem die Baukammergrundkörpersegmente bildenden metallischen Material kann es sich um ein Leichtmetall, insbesondere um Aluminium bzw. eine Aluminiumlegierung, handeln. Leichtmetalle zeichnen sich neben einem vergleichsweise geringen Gewicht in fertigungstechnischer Hinsicht durch eine vergleichsweise einfache (spanende) Bearbeitbarkeit aus.

Die geometrisch-konstruktive Dimensionierung der Baukammer bzw. des Bauraums ist zweckmäßig für die additive Fertigung vergleichsweise großer bzw. länglicher Bauteile bzw. Bauteilstrukturen ("Großstrukturen") ausgelegt. Hierbei kann es sich z. B. um Komponenten eines Kraftfahrzeugs, d. h. Karosseriestrukturen, wie Türstrukturen, handeln. Der Bauraum kann hierfür z. B. eine maximale Tiefe von 140 cm, insbesondere in einem Bereich zwischen 80 und 120 cm, aufweisen. Selbstverständlich sind hier Abweichungen nach oben und unten möglich.

Die Baukammer weist typischerweise eine (hohl)quaderartige bzw. -förmige oder (hohl)zylindrische geometrische Grundform auf.

Neben der Baukammer betrifft die Offenbarung auch eine Vorrichtung zur additiven Herstellung dreidimensionaler Objekte. Die Vorrichtung, bei welcher es sich insbesondere um eine SLS- oder SLM-Vorrichtung handelt, zeichnet sich dadurch aus, sie wenigstens eine wie beschriebene Baukammer umfasst. Sämtliche Ausführungen im Zusammenhang mit der Baukammer gelten sonach analog für die Vorrichtung.

Die Erfindung ist anhand von Ausführungsbeispielen in den Zeichnungsfiguren näher erläutert. Dabei zeigen:
- Fig. 1, 2: je eine Prinzipdarstellung einer Baukammer gemäß einem Ausführungsbeispiel; und
- Fig. 3: eine Vergrößerung der in Fig. 2 gezeigten Einzelheit C.

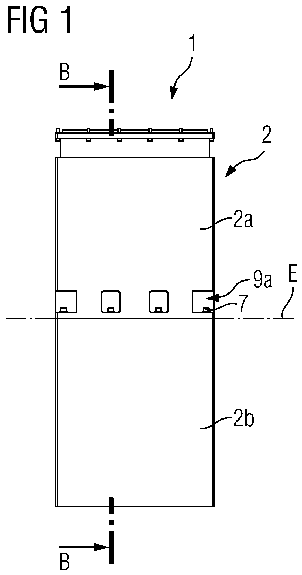

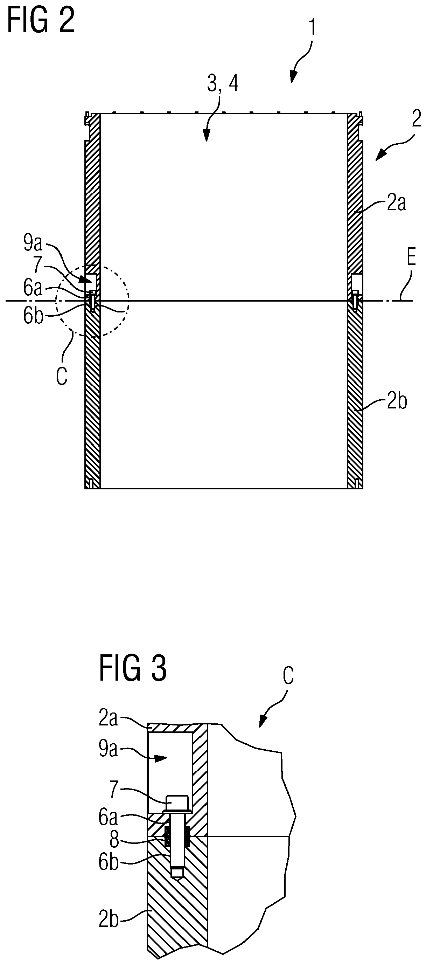

Die Fig. 1, 2 zeigen je eine Prinzipdarstellung einer Baukammer 1 gemäß einem Ausführungsbeispiel. Die Baukammer 1 ist in Fig. 1 in einer Seiten- bzw. Vorderansicht des Montagezustands und in Fig. 2 in einer entlang der in Fig. 1 gezeigten Schnittlinien B - B geschnittenen Ansicht dargestellt. Fig. 3 zeigt eine Vergrößerung der in Fig. 2 gezeigten Einzelheit C.

Die Baukammer 1 stellt eine Funktionskomponente einer Vorrichtung (nicht gezeigt) zur additiven Herstellung dreidimensionaler Objekte dar. Eine entsprechende Vorrichtung ist zur additiven Herstellung eines Objekts oder mehrerer Objekte, d. h. insbesondere technischer Bauteile bzw. technischer Bauteilgruppen, durch sukzessive schichtweise selektive Belichtung und damit einhergehende Verfestigung einzelner Baumaterialschichten aus einem verfestigbaren Baumaterial (nicht gezeigt) vermittels wenigstens eines Energiestrahls (nicht gezeigt) eingerichtet. Bei dem verfestigbaren Baumaterial kann es sich z. B. um ein Metallpulver handeln. Unter einem Metallpulver kann auch ein Pulvergemisch unterschiedlicher Metalle verstanden werden. Bei dem Energiestrahl kann es sich um einen Laserstrahl handeln. Bei der Vorrichtung kann es sich insgesamt um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Die Baukammer 1 wird im Rahmen der Durchführung additiver Herstellungsprozesse schichtweise mit selektiv zu verfestigendem Baumaterial befüllt. Der additive Aufbau des oder der jeweils additiv herzustellenden Objekte erfolgt in der Baukammer 1. Hierfür umfasst die Baukammer 1 einen Baukammergrundkörper 2, welcher einen Bauraum 3 begrenzt. Der Bauraum 3 bildet bzw. beinhaltet ein Bauvolumen 4. Der Bauraum 3 ist im Bereich seines Bodens von einer in dem Bauraum angeordneten Bauplatte (nicht gezeigt) bzw. deren (bei nicht mit Baumaterial befülltem Bauraum freiliegenden) Oberseite abschließbar bzw. abgeschlossen. Die Bauplatte ist typischerweise mit einer Trageinrichtung gekoppelt, über welche die Bauplatte in einer vertikalen Bewegungsrichtung relativ zu dem Baukammergrundkörper 2 bewegbar gelagert ist. Die Baukammer 1, die Bauplatte und die Trageinrichtung können ein Baumodul bilden und entsprechend als solches bezeichnet bzw. erachtet werden.

Anhand der Fig. ist ersichtlich, dass der Baukammergrundkörper 2 segmentiert ausgebildet ist. Der Baukammergrundkörper 2 umfasst mehrere, d. h. in dem in den Fig. gezeigten Ausführungsbeispiel zwei, unter Ausbildung des Baukammergrundkörpers 2 aneinander befestigbare bzw. im Montagezustand der Baukammer 1 aneinander befestigte Baukammergrundkörpersegmente 2a, 2b. Die Segmentierung des Baukammergrundkörpers 2 in die Baukammergrundkörpersegmente 2a, 2b erfolgt je nach Anzahl der Baukammergrundkörpersegmente 2a, 2b in einer horizontalen Segmentierungsebene E.

Die jeweiligen Baukammergrundkörpersegmente 2a, 2b sind in ihren geometrisch-konstruktiven Abmessungen so gewählt, dass diese jeweils in einem Arbeitsgang gefertigt werden können. Der bis dato problematischen Fertigung vergleichsweise hoher Baukammern 1, d. h. insbesondere Baukammern 1, deren Bauraum 3 bzw. Bauvolumen 4 eine maximale Höhe von wenigstens 50 cm überschreitet, d. h. gegebenenfalls 100 cm oder mehr beträgt, mit den geforderten engen Toleranzen wird sonach durch die Segmentierung der Baukammer 1 in mehrere Baukammergrundkörpersegmente 2a, 2b begegnet.

Durch die Möglichkeit der Befestigung jeweiliger Baukammergrundkörpersegmente 2a, 2b aneinander lassen sich grundsätzlich beliebig hohe Baukammern 1 ausbilden. Dies gilt für das in den Fig. gezeigte Ausführungsbeispiel der stapelartigen vertikalen Anordnung bzw. Befestigung jeweiliger Baukammergrundkörpersegmente 2a, 2b übereinander; die jeweiligen Baukammergrundkörpersegmente 2a, 2b sind in vertikaler bzw. vertikal benachbarter Anordnung übereinander aneinander befestigbar oder befestigt.

Die geometrisch-konstruktive Dimensionierung der Baukammer 1 bzw. des Bauraums 3 ist für die additive Fertigung vergleichsweise großer bzw. länglicher Bauteile bzw. Bauteilstrukturen ("Großstrukturen") ausgelegt. Hierbei kann es sich um Komponenten eines Kraftfahrzeugs, d. h. z. B. Karosseriestrukturen, wie Türstrukturen, handeln. Der Bauraum 3 weist hierfür eine maximale Tiefe von 140 cm, insbesondere 100 cm, auf. Die Breite der Baukammer 1 kann 90 cm, die Länge der Baukammer 1 kann 50 cm betragen.

Die Baukammer 1 bzw. der Baukammergrundkörper 2 weist eine (hohl)quaderartige bzw. -förmige Grundform auf. Entsprechend weisen die jeweiligen Baukammergrundkörpersegmente 2a, 2b eine (hohl)quaderartige bzw. -förmige Grundform auf. Die Baukammergrundkörpersegmente 2a, 2b umfassen sonach jeweils einen deren jeweilige Grundform (mit)definierenden, durch jeweilige baukammergrundkörpersegmentseitige Wandungen (nicht näher bezeichnet) begrenzten Innenraum (nicht näher bezeichnet). Der jeweilige baukammergrundkörpersegmentseitig begrenzte Innenraum bildet (im Montagezustand der Baukammer 1) einen Teil des Bauraums 3 bzw. Bauvolumens 4. Jedes Baukammergrundkörpersegment 2a, 2b begrenzt sonach einen einen vollen Innenumfang des Bauraums 3 beschreibenden Bauraumabschnitt.

Zur Befestigung - die Befestigung ist typischerweise (beschädigungs- bzw. zerstörungsfrei) lösbar - der zur Ausbildung des Baukammergrundkörpers 2 aneinander zu befestigenden bzw. befestigten Baukammergrundkörpersegmente 2a, 2b sind an jedem Baukammergrundkörpersegment 2a, 2b mehrere Befestigungselemente 6a, 6b angeordnet bzw. ausgebildet. Die jeweiligen Befestigungselemente 6a, 6b sind eingerichtet, unter Ausbildung einer (lösbaren) Befestigung der Baukammergrundkörpersegmente 2a, 2b zusammenzuwirken. In dem in den Fig. gezeigten Ausführungsbeispiel sind die jeweiligen Befestigungselemente 6a, 6b eingerichtet, unter Ausbildung einer Befestigung der beiden Baukammergrundkörpersegmente 2a, 2b kraftschlüssig zusammenzuwirken. Hierunter ist zu verstehen, dass die jeweiligen Befestigungselemente 6a, 6b eingerichtet sind, miteinander unter Ausbildung einer kraftschlüssigen Verbindung zusammenzuwirken bzw. eingerichtet sind, eine solche auszubilden.

Anhand von Fig. 1 ist ersichtlich, dass an jedem Baukammergrundkörpersegment 2a, 2b mehrere Befestigungselemente 6a, 6b (außen)umfangsmäßig (gleichmäßig) verteilt angeordnet bzw. ausgebildet sein können. Die jeweiligen baukammergrundkörpersegmentseitigen Befestigungselemente 6a, 6b fluchten im Montagezustand der Baukammer 1 miteinander, vgl. Fig. 1.

Bei entsprechenden Befestigungselementen 6a, 6b handelt es sich in dem in den Fig. gezeigten Ausführungsbeispiel um Kraftschlusselemente, welche eingerichtet sind, unter Ausbildung einer kraftschlüssigen Verbindung zusammenzuwirken bzw. eingerichtet sind, eine solche herzustellen. Die jeweiligen baukammergrundkörpersegmentseitigen Befestigungselemente 6a, 6b sind als zumindest abschnittsweise von einem Befestigungsbolzen 7 durchsetzbare, insbesondere bohrungsartige, Befestigungsaufnahmen bzw. - ausnehmungen ausgebildet und - wie anhand der Fig. 2, 3 erkennbar - im aneinander befestigten Zustand der Baukammergrundkörpersegmente 2a, 2b zumindest abschnittsweise von einem entsprechenden Befestigungsbolzen 7 durchsetzt. Bei dem Befestigungsbolzen 7 kann es sich um einen Gewinde- bzw. Schraubbolzen handeln, welcher durch ein in den Fig. 2, 3 gezeigtes hülsenförmiges Zentrierelement 8 (optional) zwischen den Baukammergrundkörpersegmenten 2a, 2b zentriert sein kann.

Eine Befestigungsaufnahme bzw. -ausnehmung des in den Fig. oberen Baukammergrundkörpersegments 2a ist als Durchgangsbohrung ausgebildet, eine Befestigungsaufnahme bzw. -ausnehmung des mit dem oberen Baukammergrundkörpersegment 2a zu verbindenden unteren Baukammergrundkörpersegments 2b ist als Sackbohrung ausgebildet. Um jeweilige Baukammergrundkörpersegmente 2a, 2b beliebig handzuhaben, kann jedes Baukammergrundkörpersegment 2a, 2b im Bereich eines (oberen) ersten Randbereichs mit einer entsprechenden Durchgangsbohrung und im Bereich eines dieser gegenüber liegend angeordneten oder ausgebildeten (unteren) ersten Randbereichs mit einer entsprechenden Sackbohrung versehen sein.

Aus vorstehenden Erläuterungen ergibt sich, dass es sich bei der kraftschlüssigen Verbindung der Baukammergrundkörpersegmente 2a, 2b um eine Schraubverbindung handelt.

Ersichtlich sind jeweilige Befestigungsaufnahmen bzw. -ausnehmungen in einem (querschnittlich betrachtet) verjüngten Aussparungsbereich 9a des Baukammergrundkörpersegments 2a angeordnet bzw. ausgebildet sein, sodass diese die Außenabmessungen des Baukammergrundkörpersegments 2a bzw. der gesamten Baukammer 1 nicht erweitern.

Wenngleich in den Fig. nicht gezeigt, ist es gleichermaßen denkbar, dass es sich bei entsprechenden Befestigungselementen 6a, 6b um, gegebenenfalls korrespondierende, Formschlusselemente handelt, welche eingerichtet sind, unter Ausbildung einer formschlüssigen Verbindung zusammenzuwirken bzw. eingerichtet sind, eine solche herzustellen. Durch das Zusammenwirken entsprechender Formschlusselemente kann sich z. B. eine Nut-Feder-Verbindung bzw. einer Verbindung nach Art einer solchen ausbilden lassen.

Bei den Baukammergrundkörpersegmenten 2a, 2b handelt es sich typischerweise um spanend, d. h. insbesondere gefräst, gefertigte metallische Bauteile. Denkbar ist gleichwohl auch eine Fertigung der Baukammergrundkörpersegmente 2a, 2b mittels Drahterodierens bzw. Drahtschneidens.

Bei dem die Baukammergrundkörpersegmente 2a, 2b bildenden metallischen Material kann es sich um ein Leichtmetall, insbesondere um Aluminium bzw. eine Aluminiumlegierung, handeln.

## Patentansprüche

1. Baukammer (1) für eine Vorrichtung zur additiven Herstellung dreidimensionaler Objekte, umfassend einen Baukammergrundkörper (2), welcher ein einen Bauraum (3) bildendes Bauvolumen (4) begrenzt, wobei der Baukammergrundkörper (2) in mehrere unter Ausbildung des Baukammergrundkörpers (2) aneinander befestigbare oder befestigte Baukammergrundkörpersegmente (2a, 2b) segmentiert ausgebildet ist, **dadurch gekennzeichnet, dass** jedes Baukammergrundkörpersegment (2a, 2b) einen einen vollen Innenumfang des Bauraums (3) beschreibenden Bauraumabschnitt begrenzt.

2. Baukammer nach Anspruch 1, **dadurch gekennzeichnet, dass** der Baukammergrundkörper (2) in wenigstens einer horizontalen Segmentierungsebene (E) segmentiert ausgebildet ist, wobei die jeweiligen Baukammergrundkörpersegmente (2a, 2b) in vertikaler Anordnung übereinander aneinander befestigbar oder befestigt sind.

3. Baukammer nach Anspruch 1 oder 2, **dadurch gekennzeichnet, dass** die Baukammergrundkörpersegmente (2a, 2b) eine hohlquaderartige, hohlzylinderartige oder ringscheibenartige Grundform aufweisen.

4. Baukammer nach einem der vorhergehenden Ansprüche, **dadurch gekennzeichnet, dass** die Baukammergrundkörpersegmente (2a, 2b) in geometrisch-konstruktiver identisch ausgebildet sind oder sich in wenigstens einem geometrisch-konstruktiven Parameter, insbesondere der Höhe, unterscheidend ausgebildet sind.

5. Baukammer nach einem der vorhergehenden Ansprüche, **dadurch gekennzeichnet, dass** an jedem Baukammergrundkörpersegment (2a, 2b) wenigstens ein Befestigungselement (6a, 6b) angeordnet oder ausgebildet ist, wobei die jeweiligen Befestigungselemente (6a, 6b) eingerichtet sind, unter Ausbildung einer Befestigung wenigstens zweier miteinander zur Ausbildung des Baukammergrundkörpers (2) zu verbindender oder verbundener Baukammergrundkörpersegmente (2a, 2b) zusammenzuwirken.

6. Baukammer nach Anspruch 5, **dadurch gekennzeichnet, dass** die jeweiligen Befestigungselemente (6a, 6b) eingerichtet sind, unter Ausbildung einer Befestigung wenigstens zweier miteinander zur Ausbildung des Baukammergrundkörpers (2) zu verbindender oder verbundener Baukammergrundkörpersegmente (2a, 2b) form- und/oder kraftschlüssig zusammenzuwirken.

7. Baukammer nach Anspruch 6, **dadurch gekennzeichnet, dass** die jeweiligen Befestigungselemente (6a, 6b) eingerichtet sind, unter Ausbildung einer Befestigung wenigstens zweier miteinander zur Ausbildung des Baukammergrundkörpers (2) zu verbindender oder verbundener Baukammergrundkörpersegmente (2a, 2b) kraftschlüssig zusammenzuwirken, wobei sie als zumindest abschnittsweise von einem Befestigungsbolzen (7) durchsetzbare, insbesondere bohrungsartige, Befestigungsaufnahmen ausgebildet sind und im aneinander befestigten Zustand zumindest abschnittsweise von einem entsprechenden Befestigungsbolzen (7) durchsetzt sind.

8. Baukammer nach einem der vorhergehenden Ansprüche, **dadurch gekennzeichnet, dass** die Baukammergrundkörpersegmente (2a, 2b) spanend, insbesondere gefräst, gefertigte metallische Bauteile sind.

9. Baukammer nach einem der vorhergehenden Ansprüche, **dadurch gekennzeichnet, dass** der Bauraum (3) eine maximale Tiefe von 140 cm, insbesondere in einem Bereich zwischen 80 und 120 cm, aufweist.

10. Vorrichtung zur additiven Herstellung dreidimensionaler Objekte, **dadurch gekennzeichnet, dass** sie wenigstens eine Baukammer (1) nach einem der vorhergehenden Ansprüche umfasst.

## Claims

1. Construction chamber (1) for a device for additive manufacturing of three-dimensional objects, comprising a construction-chamber basic body (2) which delimits an overall volume (4) which forms a construction space (3),
wherein the construction-chamber basic body (2) is formed segmented into a plurality of construction-chamber basic body segments (2a, 2b) which can be or are fastened to each other, through forming the construction-chamber basic body (2), **characterised in that** each construction-chamber basic body segment (2a, 2b) delimits a construction-space portion which describes a full inner periphery of the construction space (3).

2. Construction chamber according to Claim 1, **characterised in that** the construction-chamber basic body (2) is formed segmented in at least one horizontal segmentation plane (E), the respective construction-chamber basic body segments (2a, 2b) being fastenable or being fastened to one another in a vertical arrangement one above the other.

3. Construction chamber according to Claim 1 or 2, **characterised in that** the construction-chamber basic body segments (2a, 2b) have a hollow-cuboid-like, hollow-cylinder-like or annular-disc-like basic form.

4. Construction chamber according to one of the preceding claims, **characterised in that** the construction-chamber basic body segments (2a, 2b) are identically formed in geometrical-structural terms or are formed such that they differ in at least one geometrical-structural parameter, in particular height.

5. Construction chamber according to one of the preceding claims, **characterised in that** at least one fastening element (6a, 6b) is arranged or formed on each construction-chamber basic body segment (2a, 2b), wherein the respective fastening elements (6a, 6b) are set up to cooperate, through forming a fastening of at least two construction-chamber basic body segments (2a, 2b) which are to be or are connected together to form the construction-chamber basic body (2).

6. Construction chamber according to Claim 5, **characterised in that** the respective fastening elements (6a, 6b) are set up to cooperate in positive manner and/or in non-positive manner, through forming a fastening of at least two construction-chamber basic body segments (2a, 2b) which are to be or are connected together to form the construction-chamber basic body (2).

7. Construction chamber according to Claim 6, **characterised in that** the respective fastening elements (6a, 6b) are set up to cooperate in non-positive manner, through forming a fastening of at least two construction-chamber basic body segments (2a, 2b) which are to be or are connected together to form the construction-chamber basic body (2), wherein these segments are formed as in particular bore-like fastening receptacles which can be penetrated at least in portions by a fastening bolt (7), and in the state fastened to each other are penetrated at least in portions by a corresponding fastening bolt (7).

8. Construction chamber according to one of the preceding claims, **characterised in that** the construction-chamber basic body segments (2a, 2b) are metallic components manufactured by machining, in particular milling.

9. Construction chamber according to one of the preceding claims, **characterised in that** the construction space (3) has a maximum depth of 140 cm, in particular in a range of between 80 and 120 cm.

10. Device for the additive manufacturing of three-dimensional objects, **characterised in that** it comprises at least one construction chamber (1) according to one of the preceding claims.

## Revendications

1. Chambre de construction (1) pour un dispositif de fabrication additive d'objets tridimensionnels, comprenant un corps de base de chambre de construction (2), lequel délimite un volume de construction (4) formant un espace de construction (3), dans laquelle le corps de base de chambre de construction (2) est réalisé de manière segmentée en plusieurs segments de corps de base de chambre de construction (2a, 2b) pouvant être fixés ou fixés les uns au niveau des autres en réalisant le corps de base de chambre de construction (2), **caractérisée en ce que**
chaque segment de corps de base de chambre de construction (2a, 2b) délimite une section d'espace de construction décrivant une périphérie intérieure entière de l'espace de construction (3).

2. Chambre de construction selon la revendication 1, **caractérisée en ce que** le corps de base de chambre de construction (2) est réalisé de manière segmentée en au moins un plan de segmentation (E) horizontal, dans laquelle les segments de corps de base de chambre de construction (2a, 2b) respectifs peuvent être fixés ou sont fixés les uns au niveau des autres de manière superposée selon un agencement vertical.

3. Chambre de construction selon la revendication 1 ou 2, **caractérisée en ce que** les segments de corps de base de chambre de construction (2a, 2b) présentent une forme de base de type parallélépipède creux, de type cylindre creux ou de type rondelle annulaire.

4. Chambre de construction selon l'une quelconque des revendications précédentes, **caractérisée en ce que** les segments de corps de base de chambre de construction (2a, 2b) sont réalisés de manière identique sur le plan géométrique structurel ou sont réalisés de manière à se différencier en au moins un paramètre géométrique structurel, en particulier en la hauteur.

5. Chambre de construction selon l'une quelconque des revendications précédentes, **caractérisée en ce qu'**au moins un élément de fixation (6a, 6b) est disposé ou réalisé au niveau de chaque segment de corps de base de chambre de base (2a, 2b), dans laquelle les éléments de fixation (6a, 6b) respectifs sont configurés pour coopérer en réalisant une fixation d'au moins deux segments de corps de base de chambre de construction (2a, 2b) à relier ou reliés l'un à l'autre pour réaliser le corps de base de chambre de construction (2).

6. Chambre de construction selon la revendication 5, **caractérisée en ce que** les éléments de fixation (6a, 6b) respectifs sont conçus pour coopérer par complémentarité de forme et/ou par adhérence de force en réalisant une fixation d'au moins deux segments de corps de base de chambre de construction (2a, 2b) à relier ou reliés l'un à l'autre pour réaliser le corps de base de chambre de construction (2).

7. Chambre de construction selon la revendication 6, **caractérisée en ce que** les éléments de fixation (6a, 6b) respectifs sont configurés pour coopérer par adhérence de force en réalisant une fixation d'au moins deux segments de corps de base de chambre de construction (2a, 2b) à relier ou reliés entre deux pour réaliser le corps de base de chambre de construction (2), dans laquelle ils sont réalisés sous la forme de logements de fixation, en particulier de type alésages, pouvant être traversés au moins par endroits par un boulon de fixation (7) et sont traversés au moins par endroits par un boulon de fixation (7) correspondant dans l'état fixé les uns au niveau des autres.

8. Chambre de construction selon l'une quelconque des revendications précédentes, **caractérisée en ce que** les segments de corps de base de chambre de construction (2a, 2b) sont des composants métalliques produits par enlèvement de copeaux, en particulier de manière fraisée.

9. Chambre de construction selon l'une quelconque des revendications précédentes, **caractérisée en ce que** l'espace de construction (3) présente une profondeur maximale de 140 cm, en particulier dans une plage entre 80 et 120 cm.

10. Dispositif de fabrication additive d'objets tridimensionnels, **caractérisé en ce qu'**il comprend au moins une chambre de construction (1) selon l'une quelconque des revendications précédentes.
